# EUROPEAN PATENT APPLICATION

(11) **EP 4 056 382 A1**
(43) Date of publication of application: **14.09.2022**
(21) Application number: 22160578.5
(22) Date of filing: 07.03.2022
(51) Int. Cl.: B60B 7/04, B60B 7/06

(54) **ROAD VEHICLE WHEEL ASSEMBLY**

(30) Priority: 11.03.2021 GB 202103354
(71) Applicant: Nissan Motor Manufacturing (UK) Limited, Cranfield, Bedfordshire MK43 0DB (GB)
(72) Inventor: RUSSO, Ralf, Bedfordshire MK43 0DB (GB)

(57) **Abstract**

A road vehicle alloy wheel 1 has at least one through-hole 7. A decorative and/or aerodynamic wheel trim component 5 has at least one aperture (12, Fig. 4). A removable fastener (13, Fig. 5; or 113, Fig. 6) is provided for each aperture, the fastener having a head (14, 114) and a body (15, 115). The head is sized to prevent it passing through the wheel through-hole and the body is capable, in use, of being inserted forward through aperture 12 into the through-hole. In use the body expands after passing through the aperture, driven by pin 16 or screw 117, to secure the trim component to the wheel. The pin or screw may be withdrawn so as to contract the body, allowing the trim component 5 to be removed from the wheel 1. Figs. 8 to 10 show trim components mounted in spokes.

## Description

### Technical Field of the Invention

The present invention relates to a road vehicle wheel assembly; and to a road vehicle fitted with one or more such wheel assemblies.

### Background to the Invention

It is known to provide automobile alloy wheels with a decorative, typically plastic, trim; particularly along or between the wheel spokes. These inserts may be coloured to match the automobile body paint, or to complement it.

Such trim may have a functional as well as a decorative purpose. In one arrangement, in an attempt to improve vehicle efficiency, it is proposed to use light alloy spoked wheels with relatively thin spokes in order to reduce wheel mass. This leads to a very open wheel structure which is not favourable for good aerodynamic performance. So, it is further proposed to fill the spaces between the spokes with a lightweight plastic trim, also known as an insert.

Such trim is conveniently clipped to the wheel so that no fastening means are visible, but existing fastening arrangements have proven unreliable; leading to loss of inserts. A more secure fastening arrangement is therefore required, but trim components also need to be removable to enable them to be replaced in the event of damage, such as when a wheel is "kerbed"; while the wheel and trim assembly should remain aesthetically pleasing. Likewise, trim components may need to be fitted to a replacement wheel so that they match those on the other wheels on a vehicle to which the replacement wheel is to be fitted.

It is an object of embodiments of the present invention to provide an improved arrangement for fastening trim to a vehicle wheel which overcomes or at least mitigates problems associated with known arrangements.

### Summary of the Invention

According to the present invention there is provided a road vehicle wheel assembly comprising: a wheel comprising a plurality of spokes and at least one through-hole; at least one trim component for fitment to the wheel; and at least one removable fastener for each trim component; wherein the or each trim component comprises at least one aperture, and the or each fastener comprises a head and a body; and the head is sized to prevent it passing through the or each through-hole in the wheel; and the body is capable, in use, of being inserted into a through-hole in the wheel from the rear side of the wheel towards the front side and through an aperture in the trim component; and the body is arranged, in use, to expand after passing through the aperture in the trim component thereby to secure the trim component to the wheel; and to contract to enable the trim component to be removed from the wheel.

Each aperture in the trim component is provided in a fitting on the rear side of the trim component. Provision of a fastener with an expanding body enables the trim component to be securely fastened to the wheel, as does passing that fastener into a through-hole in the wheel. Since the fastener is passed into the wheel through the trim component, the fastener can conveniently be introduced through a rear face of the trim component into a wheel, giving a discreet installation.

As the body of the fastener can contract to enable the trim component to be removed, this enables the trim component to be changed or replaced without damaging the trim component or the fastener; which may be reused.

Of course, since the invention allows trim components to be more securely fastened, and more discreetly installed, manufacturers are more likely to install them. In consequence, the environmental benefits of including trim components that improve efficiency, are more likely to be achieved.

In use, the or each aperture in the trim component may be received into a through-hole in the wheel. In this arrangement, the body of the fastener may, in use, extend through an aperture in the trim component and into the through-hole in which the fitting and its aperture is received. A free end of the body of the fastener may thus, in use, be disposed wholly or partially within a through-hole in the wheel.

The or each aperture in the trim component may be substantially circular in cross-section, or some other closed shape. Or, it could be partially closed, such as in the form of an open-ended slot.

Multiple through-holes, apertures and fasteners can be provided to increase the security with which the trim component or components are secured to the wheel.

The wheel may comprise for example 3, 4, 5, 6, 7 or more spokes. A plurality of trim components may be provided. Respective trim components may be provided to fill some or all of the spaces between the spokes. Alternatively, or in addition, respective trim components may be provided to fit over some or all of the spokes.

The wheel may comprise one or more recesses and a respective trim component may be configured to fit into the, some or all of the recesses. Recesses for receiving a trim component may extend along each spoke.

Multiple through-holes may be provided. These may be located at or adjacent radially inner and/or outer radial ends of the spokes. In one embodiment, a single through-hole is located between each adjacent pair of spokes in or adjacent a radially inner position and two through-holes are located between each adjacent pair of spokes at a radially outer position, one adjacent each spoke. In another embodiment, a respective through-hole is provided towards the radially outer end and radially inner end of each spoke. Through-holes may be formed in the spokes and/or in the recesses.

The wheel may comprise one or more webs. These could extend between a spoke and a rim or hub of the wheel or between adjacent spokes of the wheel. One or more of the through-holes may be formed in a web.

The wheel may have an outer (or front) face, which is visible when fitted to a vehicle; and an inner (or rear) face which faces the wheel suspension when the wheel is fitted to a vehicle. The or each trim component is fitted to the front face of the wheel.

The or each trim component has an outside (or front) face intended to be visible in use and an opposite, inside (or rear) face which faces the wheel suspension when the trim component is fitted to the wheel and the wheel is fitted to a vehicle. The or each aperture of the trim component is disposed on the rear face of the trim component. The or each aperture of the trim component will therefore be hidden when the trim component is visible from the outside face. The trim component may take the form of a sheet of material. The or each aperture is formed in a structure or fitting on the inside face of the sheet of material. The structure may comprise an arm. The sheet may be flat or curved (depending on the design of the wheel to which it is to be fitted).

The at least one trim component may comprise at least one fitting. The at least one fitting may be arranged to be received into a respective through-hole in the wheel. This facilitates securely locating the fitting to the wheel. The fitting may comprise a hollow body, defining an internal cavity. The body may taper towards a free end. In one embodiment, the body is substantially cylindrical or frustro-conical. In another embodiment the body may have a square or rectangular cross-section, which may taper towards a free end.

The body of the fitting may be sized to be received with a close sliding fit within a through-hole in the wheel, or to fit snugly into a through-hole in the wheel in the case of a tapered body.

The at least one aperture is preferably formed in a fitting on the trim component. The fitting can then be received into a through-hole in the wheel, securely locating the trim component, and the fastener can be passed through the aperture in the fitting into the through-hole in the wheel, securing the fitting in the through-hole and thus the trim component to the wheel.

The fitting may be provided by a top hat shaped structure, being a cylindrical body with a surrounding flange at one end via which the fitting is connected to the trim component. This structure could be formed separately to the trim component and fastened to it, such as with an adhesive or welding; or it could be formed integrally with the trim component. In another arrangement, the fitting is provided by a hollow body without any surrounding flange.

The body of the or each fastener may be resiliently compressible, enabling it to be compressed to pass through an aperture and to expand after passing through the aperture, thus restricting its removal. The body may be configured so that if a sufficient force is applied to withdraw it from the aperture, it will compress; allowing the fastener to be withdrawn out of the aperture.

The body of the or each fastener may comprise resilient limbs which may be urged together to enable the body to pass through an aperture, and will move apart after passing through the aperture, thus restricting its removal.

The body of the or each fastener may comprise a hinged component operable to move to expand the dimensions of the body after it has been inserted through an aperture to restrict its removal.

A mechanical arrangement, such as a screw, could be provided to expand the dimensions of the body of the fastener.

The or each fastener may comprise a removable locking member operable to expand the body of the fastener and/or to lock the body in an expanded state. Provision of a locking member provides increased security against unintended removal of the fastener.

The locking member may be a pin or a screw. This may be arranged to be inserted into the body of the fastener or in between parts of the body to prevent the body from contracting so that it can be withdrawn through an aperture in the trim component. The locking member may be operable to unlock the fastener, and to allow its removal through an aperture. Where the locking member is a screw this can be unscrewed. Where it is a pin, part of the pin may be exposed when the fastener is locked, enabling it to be gripped and withdrawn. The pin may have a head.

The present invention also provides a road vehicle such as an automobile or van fitted with one or more wheel assemblies according to the invention. The road vehicle may be an electric vehicle.

### Detailed Description of the Invention

In order that the invention may be more clearly understood, embodiments thereof will now be described, by way of example only, with reference to the accompanying drawings, of which:
- Figure 1: is a view of the outside face of a road vehicle road wheel fitted with a single trim component;
- Figure 2: is a view of the inside face of the wheel of figure 1;
- Figure 3: is a perspective view of the rear face of the trim component of the wheel of figure 1;
- Figure 4: is a cross-sectional view of the trim component of figure 3 taken along the line IV-IV;
- Figure 5: is a partial cross-sectional view of the wheel of figure 1 taken along the line V-V of figure 1;
- Figure 6: is a perspective view of an alternative fastener for use with the wheel of figure 1 in an unlocked state;
- Figure 7: is a corresponding view to figure 6 with the fastener in a locked state;
- Figure 8: is a view of the outside face of another wheel;
- Figure 9: is an enlarged view of part of the wheel of figure 8 with a trim component removed; and
- Figure 10: is a perspective view of the removed trim component.

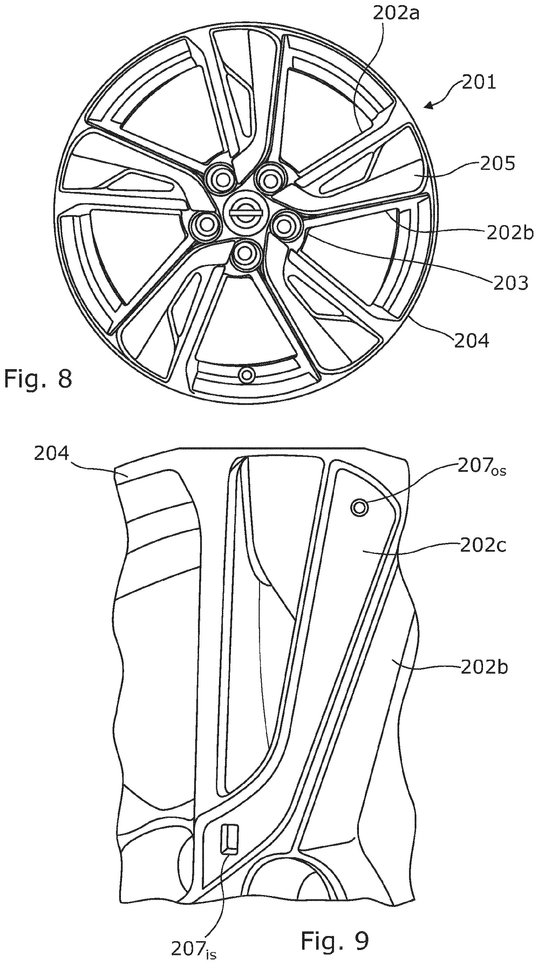

(It should be noted that the outside face of the wheel depicted in Figure 8 has the same styling as some wheels which are prior art to this patent; but the structures of the wheel and of the trim components according to the invention differ from the prior art.)

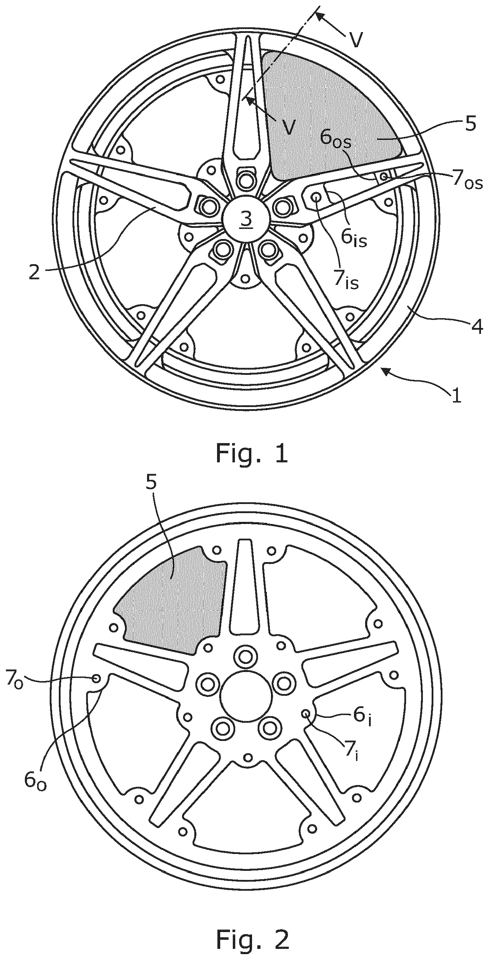

Referring to the drawings, figures 1, 2 and 5 show a light alloy road wheel 1 for an automobile. In this example the wheel is cast from an aluminium alloy. The wheel could, however, be manufactured from other suitable materials such as a magnesium or other non-ferrous alloy, and using any suitable technique, e.g. forging or the like.

Figure 1 shows the outside or front face of the wheel, being the face that faces away from a vehicle to which it is fitted and which is visible in use. Figure 2 shows the opposite, inside/rear, face of the wheel.

The wheel has five forked spokes 2, each extending from a central hub 3 to a rim 4. In use the rim will be fitted with a pneumatic tyre (not shown).

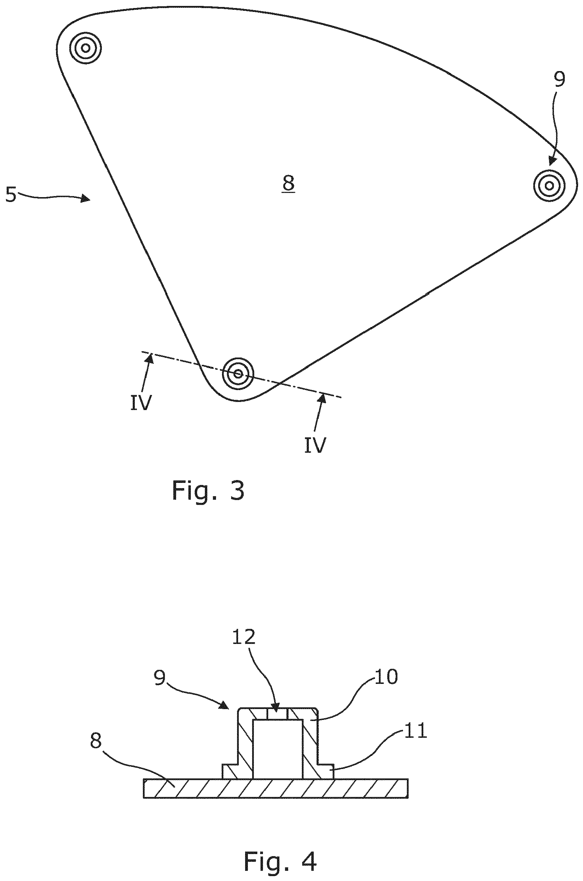

A single trim component 5, in the form of an insert, is shown fitted to the wheel 1. The trim component 5 comprises a sheet of plastics material (8, Fig. 3) which substantially fills an opening in the wheel defined between two adjacent spokes 2 and the rim 4 of the wheel. The trim component 5 has an outer face, visible in figure 1, which presents a smooth, generally flat surface on the outside face of the wheel, and it lies flush with, or slightly recessed behind, the outside face of the spoke 2 and of the wheel rim 4. The trim component 5 also has an opposite inner (rear) face visible in figure 2.

Only one trim component 5 is shown fitted to the wheel 1. It will be appreciated, however, that in use five trim components would be fitted in order to close all the spaces between adjacent pairs of spokes 2. Suitably sized and shaped trim components could also be fitted into each spoke to close the spaces between the two prongs of each forked spoke 2. Care should be taken to allow passage of air through the wheels to allow brake cooling.

By closing openings in the wheel, fitting trim components 5 improves the aerodynamic performance of a vehicle fitted with the wheel.

The manner in which the trim components 5 are mounted to the wheel 1 will now be described.

At the points where each spoke 2 joins the wheel hub 3 and rim 4, a web 6is, 6os of material formed integrally with the wheel extends between the spoke and the hub (6is) or rim (6os) and presents a substantially planar face towards the outside of the wheel 1. A circular through-hole 7is, 7os extends through each web 6is, 6os generally at right angles to the outside face of the web 6is, 6os. These webs and holes are particularly suitable for inserts between the two prongs of a spoke 2; but it can be seen from Fig. 1 that other webs and holes may be cast into the wheel for fitting of inserts 5, for example web 6i and hole 7i in Figure 2.

The trim component 5 comprises a moulded sheet 8 of plastics material (such as ABS (Acrylonitrile Butadiene Styrene) with an outline shape generally of that of a sector of a circle, but with curved corners, so that it fills the space formed between adjacent spokes 2 and the rim 4 of the wheel 1 (Fig. 3). The outside face of the sheet 8 is smooth and generally flat.

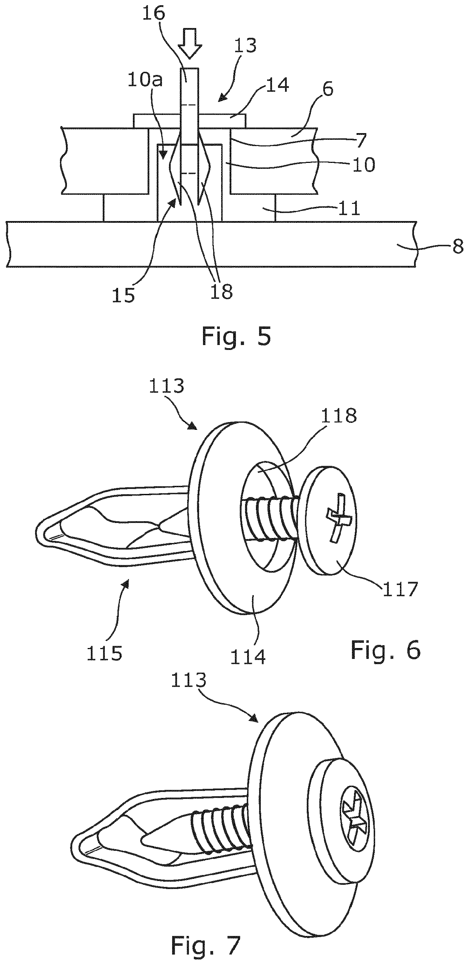

On the inside face of the sheet 8 a respective top hat structure (9, Fig. 4) is mounted at each corner of the sheet 8. Each top hat structure 9 comprises a hollow, substantially cylindrical body 10 with an open end surrounded by a flange 11 via which the structure 9 is mounted to the sheet 8, such as by an adhesive or by welding. The cylindrical body 10 has an outside diameter just smaller than the inside diameter of the through-holes 7i, 7o in the wheel 1, and a length from over the flange to its opposite end equivalent to, or just less than the depth of the through-holes 7 in the wheel 1. The opposite end of the top hat structure 9 is partially closed to define a substantially circular aperture 12 of smaller diameter than the inside diameter of the cylindrical body 10 of the top hat structure 9. An internal cavity 10a (Fig. 5) is defined within the cylindrical body. The top hat structures 9 are positioned so that when the trim component 5 is in position on the wheel, the top hat structures 9 with apertures 12 are received into the through-holes 7i, 7o in the wheel 1, locating the trim component 5 relative to the wheel 1.

The external dimensions of the top hat structures 9 are such that they are received into the through-holes 7i, 7o in the wheel with a close sliding fit; so that when the flange 11 abuts the front face of the web 6i, 6o, the partially closed ends of the top hat structure 9 lie flush with, or slightly recessed behind, the rear face of the webs 6i, 6o surrounding the through-hole 7i, 7o. Thus, in an assembled state the aperture 12 of each top hat structure 9 is received into a respective through hole 7i, 7o in the wheel, and the cavity 10a defined by each top hat structure is at least partially received in a respective through hole 7i, 7o in the wheel.

To secure the trim component 5 to the wheel, a fastener 13 is inserted into the rear of each through-hole 7i, 7o in the wheel and then through an aperture 12 in a top hat structure 9 positioned in the through-hole so that the fastener extends into the cavity 10a of the top hat structure, the cavity being positioned within the through hole in the wheel.

Each fastener (13, Fig. 5) is moulded in one piece from a thermoplastic material and comprises a head 14 connected to a body 15. The head 14 is formed by a substantially annular sheet with an outside diameter greater than that of the through-hole 7i, 7o in the wheel, so that the head 14 will not pass through the through-hole 7i, 7o. The inside diameter of the head is smaller than that of the aperture 12 in the top hat structure 9. The body 15 of the fastener 13 comprises two spaced apart prongs 18 extending from the head 14 at opposed positions adjacent to an aperture through the head. The opposed inner faces of the prongs 18 are substantially flat. The thickness of the prongs 18 increases away from the head 14 of the fastener 13 to a point approximately mid-way along their length and then decreases towards the free end of the prongs 18, so that prongs 18 each have a cross sectional shape of two opposed wedges. Owing to the material from which the fastener is moulded, the prongs 18 are resiliently moveable relative to the head; and in a rest position in the absence of an external force, the opposed inner faces of the prongs approach each other towards the free ends of the prongs. An end of a moulded plastic cylindrical pin 16 is inserted just into the aperture in the head 14 of the fastener 13 with a tight sliding fit, the remainder of the pin 16 extending away from the head of the fastener.

In use, the prongs 18 of the fastener are urged towards each other to enable them to be inserted together into the aperture 12 in the top hat structure 9 via the through-hole 7i, 7o in the wheel. The prongs 18 of the fastener are then urged into the aperture so that the head 14 abuts web 6 and/or the top hat structure 9. As the prongs 18 of the fastener are pushed through the aperture 12 in the top hat structure 9, their outer edges bear against the sides of the aperture 12. This causes the prongs to be urged further together as the thickest part of the prongs passes through the aperture and then allows them to move apart again within the cavity 10a of the top hat structure 9 as the fastener is pressed home, returning towards their rest positions. The resilience of the prongs 18 thus helps retain the fastener 13 in place, since to remove the fastener 13 requires sufficient force to be applied to cause the prongs 18 to move towards each other again so that they can pass through the aperture 12 in the top hat structure.

When the fastener is fully home, the pin 16 is pressed into the fastener 13. This moves the pin 16 so that it is in the position shown in broken lines in figure 5, with its outer end protruding slightly from the head 14 of the fastener 13 (so that the pin is removable) and extending through the head 14 and between the prongs 18. This urges the prongs 18 apart slightly from their rest position and prevents the prongs 18 from moving together sufficiently to enable the body 15 of the fastener to be withdrawn through the aperture 12 in the top hat structure 9. The pin 16 thus locks the fastener 13 in place, securing the trim component 5 to the wheel 1. As the pin 16 urges the prongs 18 apart from their rest position, the resilience of the material from which the fastener is made causes the prongs 18 to grip the pin 16, holding it in position. The pin 16 is also retained in position by its close sliding fit within the head 14.

In an alternative embodiment, the pin 16 is fitted with a grippable head (not shown), which will not pass through the aperture in the head of the fastener. This head thus remains exposed when the fastener is locked; and may be gripped with a suitable tool, e.g. pliers, to withdraw the pin and unlock the fastener.

To remove the fastener 13, the exposed end or head of the locking pin 16 is gripped and the pin withdrawn to its original position; so that it does not extend between the prongs 18 of the fastener. The body of the fastener can then be withdrawn through the aperture 12 in the top hat structure 9 by applying a force withdrawing the fastener sufficient that the prongs 18 are urged together as a result of their outside edges bearing against the inside of the aperture 12, permitting them to pass through the aperture in the top hat structure.

Figures 6 and 7 show an alternative embodiment of a fastener 113 for use with the described wheel 1 and trim components 5.

The fastener 113 comprises a one-piece, plastics material, moulding having a head 114 and body 115. The head 114 is annular in cross-section and has a domed surface through which a substantially circular aperture extends to the opposite side of the head 114. On the domed side of the head, the aperture opens out into a counterbore 118.

The body 115 of the fastener extends from the opposite side of the head 114 to the dome. The body 115 is elongate and comprises two opposed, diverging limbs extending from opposite sides of the aperture. The ends of the limbs continue into a V-shaped strip of plastics material that connects the limbs together such that the body tapers to a single free end, the body forming a loop with the head. The plastics material from which the fastener is moulded is resilient, such that the two limbs of the body 115 can be urged together and apart, but will tend to return to the configuration shown in figure 6.

So, when the body 115 is urged through an aperture 12 in a top hat structure 9 of a trim component 5, via a through-hole 7i, 7o in a wheel 1, the limbs of the body can move together to enable the body to pass through the aperture 12, and will move apart again when the body has passed through the aperture, resisting removal of the fastener 113 through the aperture 12, but nevertheless permitting removal if sufficient force is applied.

A screw 117 is partially inserted in the aperture in the fastener 113 in the unlocked state of the fastener 113 shown in figure 6. When the fastener 113 has been inserted into a wheel trim component 5, the screw 117 can be screwed into the fastener through the aperture; so that it extends between the limbs of the body 115, and the head of the screw is at least partially received into the counter bore 118 as shown in figure 7. This will serve to urge the limbs apart to the extent that they are not already apart, and prevent the limbs moving together, thus locking the fastener in position, preventing removal of the trim component. An advantage of this embodiment of fastener is that the screw can easily be removed by unscrewing it, thus unlocking the fastener and enabling it to be pulled out of the trim component if it is desired to remove the trim component; for example to repair the wheel if kerbed, to replace the trim component or to enable its re-use on another wheel.

In another embodiment, apertures for receiving fasteners are provided on the trim component in arms or other structures which are formed with or connected to the trim component.

Referring now to figures 8 to 10 there is shown another spoked, light alloy road wheel 201 for a vehicle. The wheel has five pairs of adjacent spokes 202a, 202b, each extending from a central hub 203 to a rim 204. In use the rim will be fitted with a pneumatic tyre (not shown).

One spoke 202b of each pair defines an elongate recess 202c in a front face of the spoke. The recess extends along the length of the spoke from the wheel rim 204 to the hub 203 and continues in the hub, curving towards the adjacent spoke 202a of the pair.

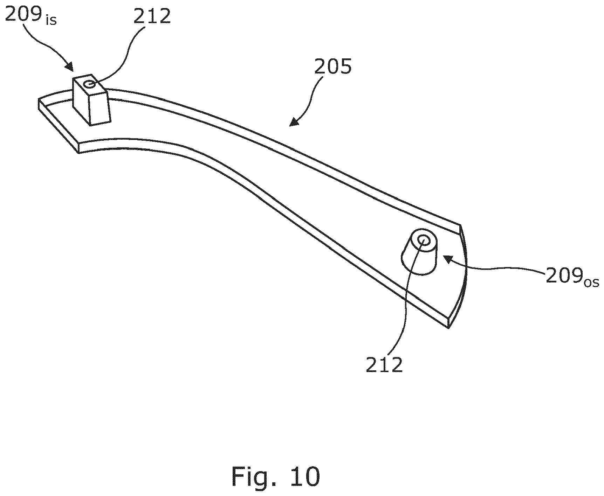

As shown in figure 8, a respective trim component 205, in the form of an insert, is fitted to each recess 202c of the wheel. The trim component 205 comprises a moulded sheet of plastics material with an outline shape that substantially fills the recess 202c. The trim component has an outer face, visible in figure 8, with a smooth, generally flat, surface. The trim component has an inner face, visible in figure 10, with a generally flat inner surface surrounded by a perimeter wall. The height of the wall defines the thickness of the sheet, and this is such that the outer surface is slightly recessed behind the face of the wheel surrounding the recess 202c when the trim component is fitted to the recess. Component 205 comprises an arm to follow the shape of the recess 202c in the wheel.

Two through-holes are formed in each recess 202c of the wheel, one 207os is formed toward the radially outer end of the spoke 202 in which the recess 202c is formed and is substantially circular. The other 207is is formed towards the opposite, radially inner, end of the recess. It is substantially rectangular and tapers slightly from the front face to the rear face of the wheel.

Fittings 209is and 209os are provided on the inner face of the trim component 205 towards opposite ends of the component. One fitting 209is (the inner fitting) is positioned and shaped to be received into a radially inner through-hole 207is in the recess 202c, and the other fitting 209os (the outer fitting) is positioned and shaped to be received into the corresponding radially outer through-hole 207os in the recess 202c when the fitting is mounted to the wheel, in each case with a close fit.

The inner fitting 209is is formed by a hollow structure with a rectangular cross section which tapers slightly from its base to its free end. The end of the fitting is closed, save for a substantially circular aperture 212 opening in to the inside of the fitting. The outer fitting 209os is generally cylindrical with an annular cross-section. The end of the fitting is also closed, save for a substantially circular aperture 212 opening in to the inside of the fitting.

The two fittings could comprise an external flange at their base, in which case the inner fitting would take the form of a top hat structure as shown in figure 4.

In use the trim component 205 is placed into a recess 202c in the outer face of the wheel 201, so that the inner 209is and outer 209os fittings are received into the radially inner 207is and radially outer 207os through-holes. Fasteners 13, 113 of the type shown in figure 5, or figures 6 and 7, are then inserted into each through-hole from the rear face of the wheel so that the bodies of the fasteners pass into the apertures 212 in the ends of the fittings 209is, 209os of the trim component, and expand inside the fittings to retain the fasteners in place; and thus retain the component 205 to the wheel 201. The locking pin 16 or screw 117 is then introduced into each fastener to lock it in place.

If it is desired to remove the trim component, the locking pin or screw is removed from each fastener, and the fasteners are pulled out of the fittings.

The embodiments are described above by way of example only. Many variations are possible without departing from the scope of protection afforded by the appended claims.

## Claims

1. A road vehicle wheel assembly comprising:
a wheel (1) comprising a plurality of spokes (2, 202a, 202b) and at least one through-hole (7, 207);
at least one trim component (5, 205) for fitment to the wheel; and
at least one removable fastener (13, 113) for each trim component;
wherein the or each trim component (5, 205) comprises at least one aperture (12, 212), and the or each fastener (13, 113) comprises a head (14, 114) and a body (15, 115);
and the head is sized to prevent it passing through the or each through-hole (7, 207) in the wheel (1);
and the body (15, 115) is capable, in use, of being inserted into a through-hole (7, 207) in the wheel from the rear side of the wheel (1) towards the front side and through an aperture (12, 212) in the trim component (5, 205);
and the body (15, 115) is arranged, in use, to expand after passing through the aperture in the trim component thereby to secure the trim component (5, 205) to the wheel (1);
and to contract to enable the trim component to be removed from the wheel.

2. A road vehicle wheel assembly according to claim 1, wherein the wheel (1) comprises one or more recesses (202c), and the or each trim component (205) is configured to fit into a respective recess.

3. A road vehicle wheel assembly according to claim 2, wherein at least one through-hole (207is, 207os) is formed in each recess (202c).

4. A road vehicle wheel assembly according to any preceding claim, comprising a plurality of trim components (5, 205) arranged to fill spaces in or between the spokes (2, 202a, 202b).

5. A road vehicle wheel assembly according to claim 1, or claim 4 when dependent on claim 1, wherein a single through-hole (7i) is located between each adjacent pair of spokes (2) in or adjacent a radially inner position and two through-holes (7o) are located between each adjacent pair of spokes (2) at a radially outer position, one adjacent each spoke.

6. A road vehicle wheel assembly according to any one of claims 2 to 4, wherein a single through-hole (207os) is located in each spoke towards a radially outer end of the spoke (202b).

7. A road vehicle wheel assembly according to claim 5 or claim 6, wherein a single through-hole (7is, 207is) is located in each spoke (2, 202b) towards the radially inner end of the spoke or in a hub (3) of the wheel (1) adjacent the radially inner end of each spoke.

8. A road vehicle wheel assembly according to any preceding claim, wherein the or each trim component (5, 205) has a front face intended to be visible in use and an opposite, rear face, and the or each aperture (12, 212) of the trim component is disposed in or on the rear face of the trim component.

9. A road vehicle wheel assembly according to any one of claims 2 to 4, or claims 6 or 8 when dependent on claims 2 to 4, or claim 7 when dependent on claim 6; wherein the at least one trim component (205) comprises at least one fitting (209is, 209os); and wherein the at least one aperture (212) is formed in the or a respective fitting; and wherein the at least one fitting (209is, 209os) is arranged to be received into a respective through-hole (207is, 207os) in the wheel (1).

10. A road vehicle wheel assembly according to claim 1 or claim 5, wherein the trim component (5) comprises a fitting (9) comprising a substantially cylindrical body (10).

11. A road vehicle wheel assembly according to any one of claims 1 to 4; or 6 to 9 when dependent on claims 1 to 4; wherein the or each trim component (205) comprises an arm and the or each aperture (212) is formed in or by the or a respective arm.

12. A road vehicle wheel assembly according to any preceding claim, wherein the body (15, 115) of the or each fastener (13, 113) is resiliently compressible, enabling it to be compressed to pass through an aperture (12, 112) and to expand after passing through the aperture.

13. A road vehicle wheel assembly according to any preceding claim, wherein the body (15, 115) of the or each fastener (13, 113) comprises resilient limbs which may be urged together to enable the body to pass through an aperture (12, 212), and will move apart after passing through the aperture.

14. A road vehicle wheel assembly according to any preceding claim, wherein the or each fastener (13, 113) comprises a locking member (16, 117) operable to expand the body (15, 115) of the fastener and/or to lock the body in an expanded state; wherein the locking member is a pin (16) or screw (117).

15. A road vehicle wheel assembly according to any preceding claim, wherein the or each trim component (5, 205) is secured to the wheel (1) by the at least one fastener (13,113).

16. A road vehicle fitted with one or more wheel assemblies according to any preceding claim.
